Europäisches Patentamt

European Patent Office

Office européen des brevets

(11) Numéro de publication: **0 515 759 A1**

## DEMANDE DE BREVET EUROPEEN

(21) Numéro de dépôt: **91480086.7**

(51) Int. Cl.5: **F04D 25/08**, B01D 53/34

(22) Date de dépôt: **29.05.91**

(43) Date de publication de la demande:
**02.12.92 Bulletin 92/49**

(84) Etats contractants désignés:
**CH DE ES FR GB IT LI**

(71) Demandeur: **Atdjian, Jean-Paul**
**33, rue Verdi**
**F-06000 Nice(FR)**

(72) Inventeur: **Atdjian, Jean-Paul**
**33, rue Verdi**
**F-06000 Nice(FR)**

(54) **Filtre pour l'épuration de l'air.**

(57) Le filtre selon l'invention pour épurer l'air s'adapte à sensiblement tout ventilateur portatif (1) et comprend un boîtier (24) contenant une ou plusieurs garnitures (46) à charbon actif et éventuellement des éléments filtrants à action purement mécanique (44, 48). L'air aspiré par le ventilateur traverse au moins en partie le filtre et sera épuré.

Un tel filtre est simple, relativement bon marché et peut être régénéré. Il peut être utilisé avec un ventilateur de table ordinaire.

FIG.1

EP 0 515 759 A1

La présente invention a pour objet un filtre afin d'épurer l'air, notamment pour enlever de l'air les odeurs de la fumée, comprenant un ventilateur portatif.

Dans des locaux, par exemple des bureaux où travaillent plusieurs personnes dont une ou plusieurs fument, les non-fumeurs se sentent généralement fortement incommodés par la fumée. Un des moyens pour éliminer la fumée est une bonne aération continuelle, mais il n'est pas toujours possible d'ouvrir les fenêtres, soit parce que cela crée un courant d'air désagréable, soit parce que les fenêtres ne sont même pas prévues pour être ouvertes. Des moyens d'aération et de climatisation sont connus, mais du fait que ces moyens sont coûteux, ils ne se trouvent que dans une minorité de locaux. Il y a d'autres locaux, par exemple des laboratoires et ateliers, où la fumée n'est pas le problème principal mais où l'air doit rester pur sans odeur ni substances nocives.

Le but de la présente invention est de créer un dispositif épurateur d'air simple et économique pouvant s'adapter à des ventilateurs portatifs existants qui fonctionneront alors pour épurer continuellement l'air qu'ils mettent en mouvement.

Ce but est atteint par le filtre défini dans la revendication indépendante 1. Des exécutions spéciales font l'objet de revendications dépendantes.

On décrira dans ce qui suit, à titre d'exemple purement illustratif, un mode de réalisation d'un filtre selon l'invention, à l'aide du dessin dans lequel:

- la FIG. 1 représente une vue latérale du filtre, monté sur un ventilateur, et
- la FIG. 2 est une vue arrière de l'ensemble selon la FIG. 1.

Selon le mode de réalisation pratique représenté dans les Figures, on voit d'abord un ventilateur de table classique et connu 1 ayant une plaque de base 10 qui est, de manière connue en soi, creuse et comporte dans son intérieur le raccordement d'un câble d'alimentation électrique 12, un interrupteur qui est représenté par un bouton tournant 14, et, éventuellement, un fusible. Le ventilateur comprend en plus un pied 16, un bâti cylindrique 18 au sommet du pied et dans lequel est logé le moteur électrique (non représenté), et un moyeu rotatif 20 muni en général de trois à six pales 22.

Le filtre selon l'invention comprend d'abord un boîtier 24 généralement cylindrique muni de plusieurs prolongations axiales 26, au moins deux, auxquelles sont fixés des rayons 28 dont le nombre correspond à celui des prolongations 26. A leur tour, tous les rayons 28 sont réunis à une bride circulaire 30 qui peut se fixer solidement autour du bâti 18 du ventilateur 1 au moyen de deux bouts 32 pliés vers l'extérieur, et d'une vis de serrage 34. Tout autre moyen de fixation peut également être utilisé. La surface intérieure de la bride 30 peut être recouverte d'un revêtement en caoutchouc, en mousse de caoutchouc ou analogue ce qui permet une fixation encore plus solide et une adaptation à d'autres formes du bâti 18, par exemple une section carrée et arrondie, ou même conique.

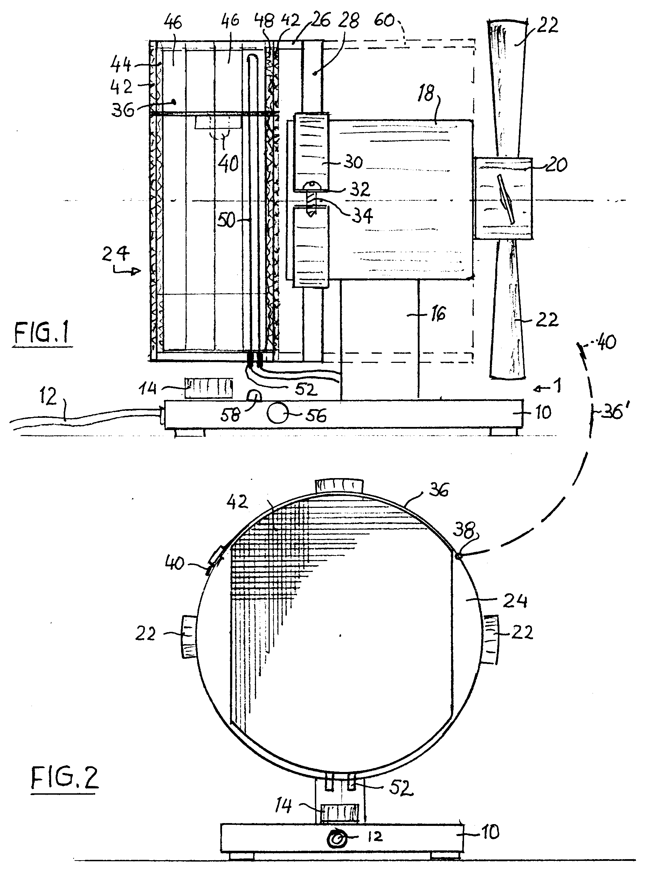

Le boîtier 24 comporte à sa partie supérieure un couvercle 36 qui peut être simplement amovible, ou bien il peut être agencé pour une ouverture par pivotement autour d'une charnière 38; en position fermée, le couvercle 36 est tenu en place par une fermeture appropriée, par exemple une fermeture à languette 40. La position ouverte du couvercle 36 est représentée dans la FIG. 2 en traits interrompus 36'.

Le boîtier 24 est fermé sur les deux faces frontale et arrière par un grillage 42. L'intérieur du boîtier 24 comporte, selon les problèmes d'épuration à resoudre, une ou de préférence plusieurs garnitures 46 sous forme de cylindres latéralement aplatis, voir FIG. 2. Les aplatissements latéraux permettent l'enlèvement vertical et vers le haut des garnitures 46 une à une ou toutes ensemble lorsque le couvercle 36 a été enlevé ou ouvert.

Dans la réalisation représentée, les garnitures sont les suivantes, énumérées de gauche à droite: une plaque filtrante en cellulose, tissu ou non-tissé 44, quatre garnitures 46 remplies de charbon actif granulé, et une seconde plaque filtrante 44. Il est naturellement possible de changer cette suite de garnitures à volonté, de supprimer les plaques filtrantes 44, de les placer entre deux garnitures 46, ou d'utiliser des éléments filtrants analogues ou similaires, par exemple des garnitures de gel de silice, de ouate, etc.

Les garnitures au charbon actif sont de préférence des sachets cylindriques aplatis ayant une épaisseur comprise entre 0,5 et 10 cm, et étant fabriquées à partir d'une fine grille ou toile en acier inoxydable, en laiton ou même en matière plastique telle qu'une moustiquaire. Les surfaces planes des sachets peuvent comprendre des éléments de renforcement.

De manière connue, le charbon actif est une matière adsorbante particulièrement performante. Il a une surface spécifique active comprise entre 500 et 1500 $m^2$/g et est employé sous forme de granulés ayant un diamètre moyen compris entre environ 0,5 et 1,5 à 2 mm. Il est sans autre possible que le charbon actif adsorbe 10% et davantage de son propre poids en polluants gazeux. Par exemple, le tétrachlorure de carbone est retenu par le charbon actif à raison de 34% en poids du charbon. Un filtre selon l'invention comprenant, par exemple, 3 ou 4 sachets de charbon actif ayant chacun une épaisseur de 1,5 cm, le diamètre du sachet (de la garniture) étant, par exemple, de 16 cm, le filtre selon l'invention contient environ1 litre de charbon actif ce qui assure une capacité filtrante de plusieurs mois si le ventilateur est en opération pendant 6 à 8 heures par jour. En plus, si le boîtier et tous les autres composants du filtre sont en matière plastique légère, le filtre ne pèse guère plus que 500 à 600 g et n'augmente donc pas de façon inacceptable le poids du dispositif complet.

Les plaques filtrantes 44 et 48 servent à retenir les particules solides et liquides en suspension dans l'air telles que les particules de fumée et de goudron provenant de la combustion du tabac. Le charbon actif a pour but principal d'adsorber les composants gazeux provoquant une mauvaise odeur dans l'air.

Le filtre doit être régénérer de temps en temps, normalement deux ou trois fois par an, selon les heures de travail du filtre. D'abord, il suffit de changer les plaques filtrantes dans des intervalles appropriés. Normalement, il ne vaut pas la peine de les nettoyer; on les jettera et remettra de nouvelles plaques. En ce qui concernes les garnitures à charbon actif, il suffit pour leur régénération de les placer dans un four chauffé à 105-115 °C ce qui libère la plupart des substances adsorbées, ou l'on emploie un jet de vapeur d'eau. Alternativement, on peut nettoyer les garnitures par lavage dans un solvant organique tel que l'essence, le pétrole, l'acétone, l'alcool etc., et de les sécher ensuite à l'air libre ou dans un four chauffé.

Une possibilité élégante de régénération est le chauffage des garnitures au sein du boîtier 24. A cette fin, on prévoit un corps chauffant électrique perméable à l'air, de préférence une grille s'étendant substantiellement sur toute la section de la garniture, Ce corps de chauffe 50 (FIG.1) est branché par deux fiches isolées 52 à un conduit électrique 54 sortant du pied 10. Un réducteur approprié de tension, non représenté dans la FIG. 1, réduit la tension aux bornes 54 à 24 V par exemple. Le corps de chauffe 50 est agencé de telle façon que le courant électrique fournit une température maximum de 115 °C par exemple pour éviter toute surchauffe. Le ventilateur sera posé à l'air libre et sera mis en marche pour aspirer l'air vicié sortant de la garniture 46 en régénération thermique décrite. Le corps de chauffe 50 sera enclenché par l'interrupteur 56 qui peut être relié à une minuterie. La lampe témoin 58, par exemple une diode lumineuse, indique la phase de régénération.

Lorsque le ventilateur 1 est en marche, les pales 22 aspirent de l'air à travers le bâti 18 en refroidissant le moteur de manière connue en soi. Cet air et de l'air contournant le bâti 18 est aspiré à travers le filtre 24 où il est épuré. Une partie de l'air aspiré par les pales 22 ne traverse pas le filtre mais au fur et à mesure de l'opération du ventilateur, il passera tôt ou tard par le filtre.

On peut augmenter la quantité globale d'air filtré en prévoyant une chemise 60 en prolongation vers l'avant du boîtier 24 qui forme un conduit d'air jusqu'aux pales 22 en rotation.

Tout le filtre peut être fabriqué en matière plastique, même en plastique de récupération. La bride 30 et même la vis 34 peuvent également être fabriquées en cette matière.

Le bouton 14 commande ou bien un interrupteur simple ou bien un "dimmer", c'est-à-dire un réducteur de tension, apte à faire tourner les pales du ventilateur à des vitesses variées.

Il est évident que l'homme du métier peut apporter des modifications ou perfectionnements au filtre objet de l'invention. Si l'on prévoit par exemple une distance suffisante entre les rayons 28 et la bride 30, d'une part, et le boîtier 24 d'autre part, et que le nombre des rayons 28 est le même que le nombre des pales 22, on peut placer le filtre avant l'hélice 20, 22. Cette exécution est plus efficace mais moins esthétique et plus lourd.

Le boîtier 24 du filtre ne doit pas nécessairement avoir la forme d'un cylindre. Par exemple, une forme irrégulière du boîtier peut également entrer en ligne de compte.

Le ventilateur-épureur de l'invention est facile à fabriquer, à monter et à entretenir et tient l'air d'un local absolument propre sans créer de courants d'air indésirables car il peut être dirigé selon les nécessités du confort personnel.

Bien entendu, le filtre selon l'invention qui est adaptable aux ventilateurs de table, peut également être livré sous forme d'ensemble comprenant un ventilateur et un filtre selon l'invention déjà monté sur ce dernier.

## Revendications

1. Filtre pour l'épuration de l'air, notamment pour l'utilisation dans un local où l'on fume, caractérisé en ce qu'il comporte des moyens pour adsorber des substances malodorantes et nocives contenues dans l'air, et des moyens pour adapter le filtre adsorbant au corps d'un ventilateur portatif.

2. Filtre selon la revendication 1, caractérisé par un boîtier (24) substantiellement prismatique, fermé aux deux faces frontales par une grille (42); par un couvercle (36) fixé au boîtier de manière amovible ou pivotante; par au moins une garniture essentiellement prismatique (46) insérée dans le boîtier (24) de manière amovible, remplie de matière adsorbante et perméable à l'air; et par une bride (30, 32, 34) adaptable au corps (18) d'un ventilateur (1) et réunie au boîtier par des rayons (28).

3. Filtre selon la revendication 1 ou 2, caractérisé en ce qu'il est agencé pour s'adapter à la partie arrière du corps du ventilateur.

4. Filtre selon la revendication 1 ou 2, caractérisé en ce qu'il est agencé pour s'adapter à la partie avant du corps du ventilateur.

5. Filtre selon l'une quelconque des revendications 2 à 4, caractérisé en ce que le boîtier (24) contient également au moins une plaque filtrante poreuse amovible (44) placée derrière les grilles (42) et/ou entre deux garnitures.

6. Filtre selon l'une quelconque des revendications 2 à 5, caractérisé par une chemise (60) en prolongation du boîtier (24) vers les pales du ventilateur (1).

7. Filtre selon l'une quelconque des revendications 2 à 6, caractérisé en ce que l'une au moins des garnitures (46) remplie de matière adsorbante comporte un corps de chauffe (50) électrique destiné à la régénération de la matière adsorbante.

8. Filtre selon l'une quelconque des revendications 2 à 7, caractérisé en ce que la matière adsorbante est le charbon actif.

9. Filtre selon la revendication 2, caractérisé en ce que le boîtier (24) est substantiellement cylindrique, et que les garnitures (46) ont la forme cylindrique plate, d'une épaisseur comprise entre 5 et 25 mm, les garnitures (46) étant aplaties aux parties latérales opposées.

10. Ventilateur portatif pour l'épuration de l'air, notamment pour l'air contenant de la fumée de tabac, comprenant un ventilateur de table muni d'un dispositif filtrant selon l'une au moins des revendications 1 à 9.

FIG.1

FIG.2

Office européen
des brevets

**RAPPORT DE RECHERCHE EUROPEENNE**

Numero de la demande

EP  91 48 0086

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-U-8 531 540  (R. DE ANDRADE)<br>* revendications 1-3; figure *<br>--- | 1-5,8, 10 | F 04 D  25/08<br>B 01 D  53/34 |
| A | DE-A-3 501 678  (H. HÖLTER)<br>* revendications 1,2; figure *<br>--- | 1-5 | |
| A | EP-A-0 352 113  (EAGLE, MILITARY GEAR OVERSEAS LTD.)<br>* document en entier *<br>----- | | |

**DOMAINES TECHNIQUES RECHERCHES (Int. Cl.5)**

B 01 D  46/00
B 01 D  53/00
F 04 D  25/00
F 04 D  29/00

Le présent rapport a été établi pour toutes les revendications

| Lieu de la recherche | Date d'achèvement de la recherche | Examinateur |
|---|---|---|
| BERLIN | 01-12-1991 | BERTRAM H E H |

EPO FORM 1503 03.82 (P0402)